# EUROPEAN PATENT APPLICATION

(11) **EP 4 578 805 A1**
(43) Date of publication of application: **02.07.2025**
(21) Application number: 24218801.9
(22) Date of filing: 10.12.2024
(51) Int. Cl.: B65G 47/86

(54) **CONTAINER CONVEYANCE DEVICE**

(30) Priority: 25.12.2023 JP 2023218226
(71) Applicant: Shibuya Corporation, Kanazawa-shi, Ishikawa 920-8681 (JP)
(72) Inventor: YONEMURA, Yuichi, Ishikawa, 920-8681 (JP); SHOMIZU, Naoto, Ishikawa, 920-8681 (JP)
(74) Representative: Mewburn Ellis LLP

(57) **Abstract**

To achieve an action of retracting intermediate grippers GB and adjustment of a conveyance pitch by one intermediate rotary wheel. A conveyance pitch in a sixth rotary wheel H6 (downstream rotary wheel) is set to be smaller than a conveyance pitch in a fourth rotary wheel H4 (upstream rotary wheel). A rocking unit and a switching unit are provided to a fifth rotary wheel H5 (intermediate rotary wheel), the rocking unit causing a conveyance pitch in the fifth rotary wheel H5 to be equal to a conveyance pitch in the sixth rotary wheel H6 by rocking intermediate grippers GB at a downstream-side delivery position P2, at which delivered to the sixth rotary wheel H6, the switching unit switching an opening degree of the intermediate grippers GB to a retracted state in which interference with PET bottles 1 held by the fourth rotary wheel H4 can be prevented. When the fourth rotary wheel H4 is stopped, the switching unit switches the intermediate grippers GB from the normal state to the retracted state at an upstream-side delivery position P1, and from the retracted state to the normal state at the downstream-side delivery position P2.

## Description

### BACKGROUND OF THE INVENTION

### Field of the Invention

The present invention relates to a container conveyance device, and more particularly to a container conveyance device including an intermediate rotary wheel that delivers containers from an upstream rotary wheel to a downstream rotary wheel.

### Description of the Related Art

Conventionally, for a beverage production line that performs, for example, processing ranging from molding PET bottles as containers to filling beverage, there is a known beverage production line including a blow molding part and a filling part, the blow molding part molding PET bottles, the filling part filling beverage or the like into the PET bottles. In these blow molding part and filling part, containers are conveyed by a container conveyance device including a plurality of rotary wheels (Japanese Patent No. 5211517, Japanese Patent No. 6861101) .

The container conveyance devices described in Japanese Patent No. 5211517 and Japanese Patent No. 6861101 include an upstream rotary wheel, a downstream rotary wheel, an intermediate rotary wheel, and an opening/closing unit, the upstream rotary wheel including upstream grippers configured to grip containers, the downstream rotary wheel including downstream grippers configured to grip the containers, the intermediate rotary wheel being provided between the upstream rotary wheel and the downstream rotary wheel, and including intermediate grippers configured to grip the containers, the opening/closing unit being configured to open and close gripping members, which constitute the intermediate grippers.

Of these container conveyance devices, the container conveyance device of Japanese Patent No. 5211517 continues rotation of the intermediate rotary wheel and the downstream rotary wheel also in the case in which the upstream rotary wheel, which constitutes the blow molding part, is abnormally stopped, thus preventing stoppage for respective devices constituting the filling part.

To achieve the above, in Japanese Patent No. 5211517, a switching unit is provided to prevent the gripping members of the intermediate grippers of the intermediate rotary wheel that continues rotation from interfering with a container held by the upstream gripper of the upstream rotary wheel that is stopped, the switching unit being configured to open the gripping members of the intermediate grippers to a retracted state in which the opening degree of the gripping members is larger than that in a normal state.

In contrast, in the container conveyance device of Japanese Patent No. 6861101, the conveyance pitch of a container in the downstream rotary wheel is set to be smaller than the conveyance pitch of a container in the upstream rotary wheel and hence, the conveyance pitch is adjusted by the intermediate rotary wheel.

To achieve the above, in Japanese Patent No. 6861101, a rocking unit configured to rock the intermediate grippers is provided to the intermediate rotary wheel and, at a downstream-side delivery position, at which containers are delivered between the intermediate rotary wheel and the downstream rotary wheel, the conveyance pitch is adjusted by rocking the intermediate grippers such that adjacent intermediate grippers have a small interval.

However, in the case in which the intermediate rotary wheel described in the above-mentioned Japanese Patent No. 5211517 and the intermediate rotary wheel described in the above-mentioned Japanese Patent No. 6861101 are provided to a beverage production line, there is a problem of an increase in installation space, the intermediate grippers being retracted when the upstream rotary wheel is stopped in the intermediate rotary wheel described in the above-mentioned Japanese Patent No. 5211517, the intermediate rotary wheel described in the above-mentioned Japanese Patent No. 6861101 performing adjustment of a conveyance pitch.

The present invention has been made in view of such a problem, and it is an object of the present invention to provide a container conveyance device that can achieve an action of retracting intermediate grippers and adjustment of a conveyance pitch by one intermediate rotary wheel.

### SUMMARY OF THE INVENTION

In other words, a container conveyance device comprising: an upstream rotary wheel including an upstream gripper configured to grip a container; a downstream rotary wheel including a downstream gripper configured to grip the container; an intermediate rotary wheel provided between the upstream rotary wheel and the downstream rotary wheel, and including an intermediate gripper configured to grip the container; and an opening/closing unit configured to open and close a gripping member constituting the intermediate gripper, the container conveyance device being characterized in that
a conveyance pitch of the container in the downstream rotary wheel is set to be smaller than a conveyance pitch of the container in the upstream rotary wheel,
a rocking unit configured to rock the intermediate gripper is provided to the intermediate rotary wheel and, at a downstream-side delivery position, at which delivered to the downstream rotary wheel, a conveyance pitch of the container is caused to be equal to the conveyance pitch of the downstream gripper by rocking the intermediate gripper such that adjacent intermediate grippers approach each other,
a switching unit is further provided to the intermediate rotary wheel, the switching unit being configured to switch an opening degree of the gripping member of the intermediate gripper between a normal state and a retracted state, the container being delivered in the normal state, the opening degree of the gripping member in the retracted state being larger than the opening degree of the gripping member in the normal state, and
in a case in which the upstream rotary wheel is stopped, but rotation of the intermediate rotary wheel is continued, the switching unit switches the intermediate gripper from the normal state to the retracted state before the intermediate gripper reaches an upstream-side delivery position at which the container is delivered from the upstream rotary wheel, and the switching unit switches the intermediate gripper from the retracted state to the normal state before the intermediate gripper reaches the downstream-side delivery position from the upstream-side delivery position.

### Advantageous Effect of Invention

According to the above-mentioned invention, the rocking unit and the switching unit are provided to one intermediate rotary wheel and hence, a conveyance pitch can be adjusted between the upstream rotary wheel and the downstream rotary wheel and, in addition, when the upstream rotary wheel is abnormally stopped, it is possible to prevent the intermediate gripper from colliding with the container held by the upstream gripper.

However, in the case in which the above-mentioned configuration is adopted, there is a concern that if the intermediate gripper of the intermediate rotary wheel maintains the retracted state at the time of the upstream rotary wheel being abnormally stopped, intermediate grippers may approach each other at the downstream-side delivery position, at which delivered to the downstream rotary wheel, thus causing collision of the gripping members.

In view of the above, in the present invention, before each intermediate gripper reaches the downstream-side delivery position, at which delivered to the downstream rotary wheel, the intermediate gripper is switched from the retracted state to the normal state so as to prevent collision between the gripping members.

### BRIEF DESCRIPTION OF THE DRAWINGS

FIG. 1 is a plan view of a beverage production line according to the present embodiment;
FIG. 2 is a plan view showing wheels ranging from an upstream wheel to a downstream wheel;
FIG. 3 is a cross-sectional view of a sterilizing unit;
FIG. 4 is a diagram illustrating a switching unit for an intermediate gripper;
FIG. 5 is a diagram illustrating the switching unit for the intermediate gripper;
FIG. 6 is a diagram illustrating an open/closed state of the intermediate gripper; and
FIG. 7 is a diagram illustrating actions of the switching unit and a collision preventing unit.

### DETAILED DESCRIPTION OF THE INVENTION

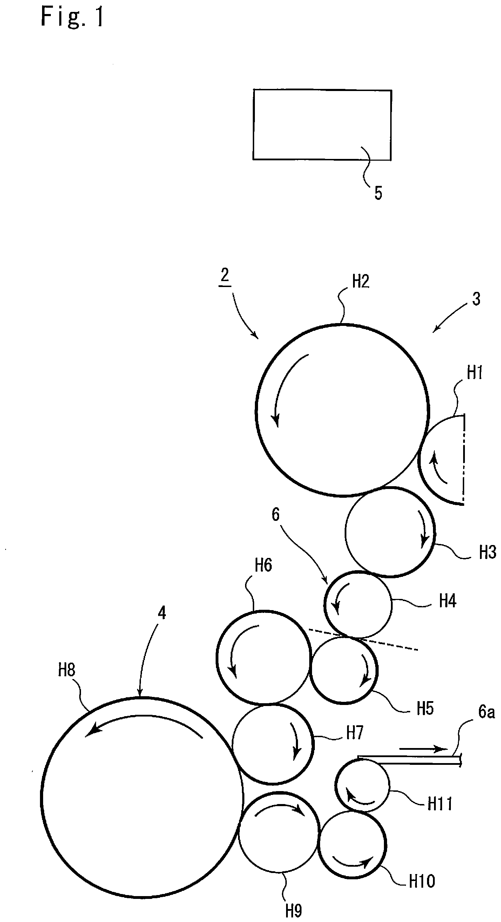

Hereinafter, an embodiment shown in the drawings is described. FIG. 1 shows a beverage production line 2 that performs processing from molding PET bottles 1 as containers to filling beverage. The beverage production line 2 includes a blow molding part 3 and a filling part 4, the blow molding part 3 forming parisons into PET bottles 1 by blow molding, the filling part 4 performing processing, such as cleaning and filling of beverage, on the PET bottles 1 formed by blow molding. The beverage production line 2 is controlled by a control unit 5 formed of a computer or the like.

The parisons and the PET bottles 1 are conveyed by a container conveyance device 6 according to the present invention, the container conveyance device 6 comprising first to eleventh rotary wheels H1 to H11. Grippers provided on the outer periphery of the respective rotary wheels H deliver the PET bottles 1 at delivery positions, at which the adjacent rotary wheels H are approximate to each other, to convey the PET bottles 1 along a conveyance path shown by thick lines in FIG. 1.

The blow molding part 3 includes the first to fourth rotary wheels H1 to H4 of the container conveyance device 6. The first rotary wheel H1 constitutes a supply unit configured to supply parisons. The second rotary wheel H2 constitutes a blow molding unit configured to form the parisons into PET bottles 1 by blow molding. The third rotary wheel H3 constitutes a discharging unit. The fourth rotary wheel H4 constitutes a delivering unit configured to deliver the PET bottles 1 to the filling part 4.

The filling part 4 includes the fifth to eleventh rotary wheels H5 to H11 of the container conveyance device 6 and a discharging conveyor 6a. The fifth rotary wheel H5 constitutes a sterilizing unit configured to sterilize the PET bottles 1. The sixth rotary wheel H6 constitutes a cleaning unit configured to clean the PET bottles 1. The seventh rotary wheel H7 constitutes a supply unit. The eighth rotary wheel H8 constitutes a filling unit configured to fill liquid into the PET bottles 1. The ninth rotary wheel H9 constitutes a discharging unit. The tenth rotary wheel H10 constitutes a capping unit configured to mount caps on the PET bottles 1. The eleventh rotary wheel H11 constitutes a discharging unit configured to discharge the PET bottles 1 to the discharging conveyor 6a.

In the present embodiment, the blow molding part 3 and the filling part 4 can be separately controlled by the control unit 5. The first to fourth rotary wheels H1 to H4, which constitute the blow molding part 3, and the fifth to eleventh rotary wheels H5 to H11, which constitute the filling part 4, are driven by different drive sources.

Therefore, even in a case in which the blow molding part 3, which is disposed on the upstream side, is abnormally stopped by the control unit 5, the filling part 4, which is disposed on the downstream side, can continue to be actuated and hence, a series of processing, such as filling of beverage and capping, can be completed for the PET bottles 1 held by the filling part 4.

The blow molding unit, which constitutes the blow molding part 3, the cleaning unit and the filling unit, which constitute the filling part 4, and the capping unit are conventionally known and hence, detailed description of such components will be omitted.

In the container conveyance device 6 of the present embodiment, a conveyance pitch of a PET bottle 1 in the filling part 4 is set to be smaller than a conveyance pitch of a PET bottle 1 in the blow molding part 3. To be more specific, the conveyance pitch in the filling part 4 is set to 30π, whereas the conveyance pitch in the blow molding part 3 is set to 48π.

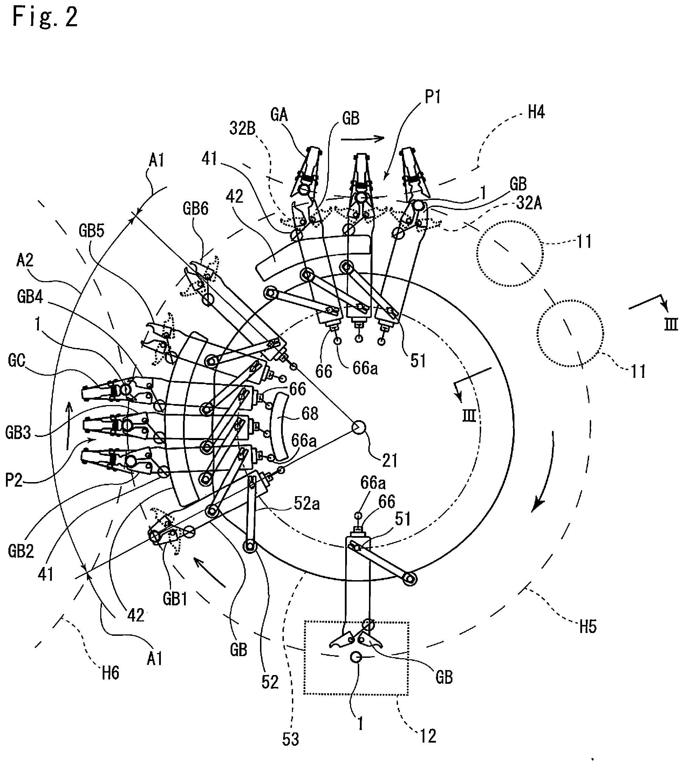

FIG. 2 is an enlarged view of the fourth to sixth rotary wheels H4 to H6 located at the boundary between the blow molding part 3 and the filling part 4. The fourth rotary wheel H4 located at the downstream end of the blow molding part 3 constitutes an upstream rotary wheel according to the present invention, the fifth rotary wheel H5 located at the upstream end of the filling part 4 constitutes an intermediate rotary wheel according to the present invention, and the sixth rotary wheel H6 constitutes a downstream rotary wheel according to the present invention.

The fifth rotary wheel H5 constitutes the sterilizing unit configured to sterilize PET bottles 1, and delivers PET bottles 1 supplied from the fourth rotary wheel H4, at a conveyance pitch of 48π, to the sixth rotary wheel H6 at a conveyance pitch of 30π. That is, the fifth rotary wheel H5 is also configured to be capable of adjusting a conveyance pitch.

The fourth rotary wheel H4 rotates in the counterclockwise direction in the drawing, and includes a plurality of upstream grippers GA along the outer peripheral edge thereof in such a way as to cause a conveyance pitch of a PET bottle 1 to be 48π.

In contrast, the sixth rotary wheel H6 also rotates in the counterclockwise direction in the drawing, and includes a plurality of downstream grippers GC along the outer peripheral edge thereof in such a way as to cause a conveyance pitch of a PET bottle 1 to be 30π.

Although a detailed description of the upstream gripper GA and the downstream gripper GC will be omitted since these components have conventionally-known configurations, each of the upstream gripper GA and the downstream gripper GC includes a pair of gripping members and a spring, the pair of gripping members gripping a PET bottle 1, the spring biasing the gripping members in a direction in which the gripping members approach each other.

The gripping members are configured to grip the neck part of the PET bottle 1, and are always biased by the spring in a closing direction, thus gripping the PET bottle 1.

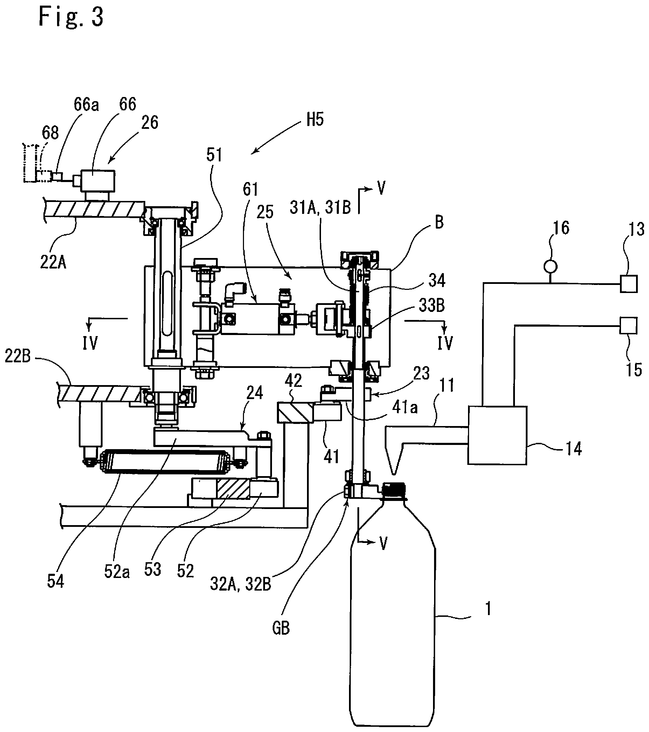

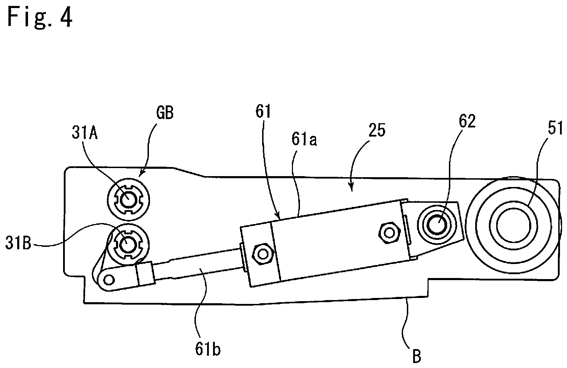

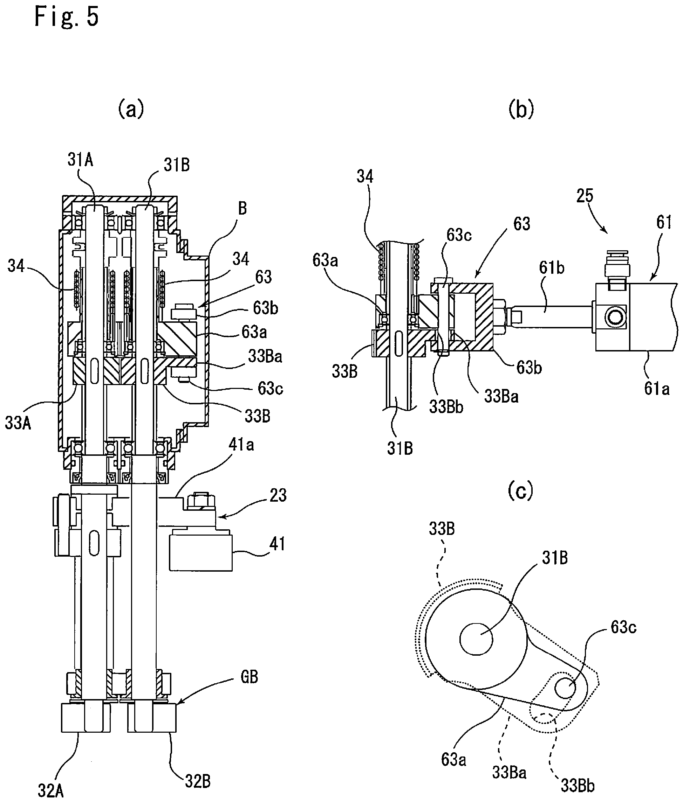

FIG. 3 shows a cross-sectional view taken along III-III in FIG. 2, and shows a cross-sectional view of the fifth rotary wheel H5, which constitutes the sterilizing unit. FIG. 4 shows a cross-sectional view taken along IV-IV in FIG. 3, and FIG. 5 shows a cross-sectional view taken along V-V in FIG. 3.

The intermediate grippers GB that hold the PET bottles 1 are provided to the fifth rotary wheel H5 at predetermined intervals, and injection nozzles 11 and a reject box 12 (see FIG. 2) are provided on the conveyance path for the PET bottles 1 held by the intermediate grippers GB, the injection nozzles 11 injecting hydrogen peroxide vapor as a sterilizing agent, the reject box 12 being provided to collect PET bottles 1 for which sterilization failure is detected.

First, the sterilizing unit will be described. A hydrogen peroxide solution supply unit 13, a vaporizing chamber 14, and an air supply unit 15 are connected to the injection nozzles 11, the hydrogen peroxide solution supply unit 13 supplying hydrogen peroxide aqueous solution, the vaporizing chamber 14 causing the hydrogen peroxide aqueous solution to vaporize so as to generate hydrogen peroxide vapor, the air supply unit 15 causing the hydrogen peroxide vapor in the vaporizing chamber 14 to be injected from the injection nozzles 11. In the present embodiment, the injection nozzle 11 is provided at two positions.

The hydrogen peroxide solution supply unit 13 supplies hydrogen peroxide aqueous solution while measuring the flow rate of the hydrogen peroxide aqueous solution by a flowmeter 16. Hydrogen peroxide vapor which is vaporized in the vaporizing chamber 14 is sent to the injection nozzles 11 by air from the air supply unit 15.

Each injection nozzle 11 is provided at a position higher than the PET bottles 1 held by the intermediate grippers GB, and injects injected hydrogen peroxide vapor into the PET bottles 1 to sterilize the inside of the PET bottles 1.

The control unit 5 monitors the flow rate of hydrogen peroxide aqueous solution by the flowmeter 16. When this flow rate becomes lower than a specified value, the control unit 5 determines PET bottles 1 that passed the injection nozzles 11 at such a point in time to be sterilization failures, and such PET bottles 1 are collected in the reject box 12.

The number of positions at which the injection nozzle 11 is disposed is not limited to two, and may be three or more. It is also possible to inject hydrogen peroxide vapor to the outer parts of the PET bottles 1 to sterilize the outer parts of the PET bottles 1.

The fifth rotary wheel H5 includes an upper table 22A and a lower table 22B which rotate about a rotary shaft 21 (see FIG. 2), and the intermediate grippers GB are provided at equal intervals along the outer peripheral edges of these tables 22A, 22B.

The fifth rotary wheel H5 includes an opening/closing unit 23, a rocking unit 24, a switching unit 25, and a collision preventing unit 26, the opening/closing unit 23 opening and closing the intermediate grippers GB, the rocking unit 24 rocking the intermediate grippers GB in the horizontal direction, the switching unit 25 switching the intermediate grippers GB between a normal state and a retracted state described later, the collision preventing unit 26 preventing collision between the adjacent intermediate grippers GB at the time of power failure or the like.

The rocking unit 24 rocks the intermediate grippers GB, thus allowing PET bottles 1 to be received from the fourth rotary wheel H4 at a conveyance pitch of 48π, and allowing the PET bottles 1 to be delivered to the sixth rotary wheel H6 at a conveyance pitch of 30π.

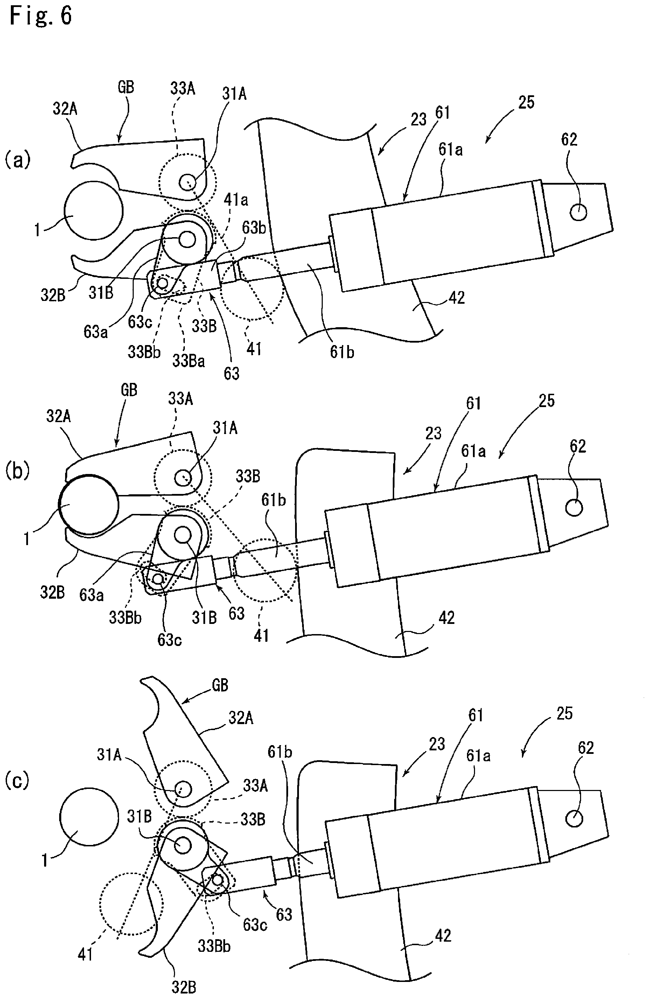

The switching unit 25 brings the intermediate grippers GB into the normal state shown in FIG. 6(a) and FIG. 6(b) to allow PET bottles 1 to be delivered at an upstream-side delivery position P1 and a downstream-side delivery position P2, delivery being made from the fourth rotary wheel H4 at the upstream-side delivery position P1, delivery being made to the sixth rotary wheel H6 at the downstream-side delivery position P2. The switching unit 25 brings the intermediate grippers GB into the retracted state shown in FIG. 6(c) to allow the intermediate grippers GB to be retracted so as not to interfere with PET bottles 1 held by the upstream grippers GA even in a case in which the fourth rotary wheel H4 is abnormally stopped.

The intermediate grippers GB are provided to rocking boxes B provided between the upper table 22A and the lower table 22B in a rockable manner. Each intermediate gripper GB includes a first rotary shaft 31A, a second rotary shaft 31B, a first gripping member 32A, and a second gripping member 32B, the first rotary shaft 31A and the second rotary shaft 31B being provided at the outer side of the rocking box B, the first gripping member 32A and the second gripping member 32B being provided at the lower end parts of these first and second rotary shafts 31A, 31B.

The first rotary shaft 31A and the second rotary shaft 31B are rotatably and pivotally supported by portions of the rocking box B via bearings, the portions forming the outer peripheral side of the rocking box B. The lower end parts of the first and second rotary shafts 31A, 31B protrude downward from the rocking box B, and the first gripping member 32A and the second gripping member 32B are fixed to the lower end parts.

The first and second gripping members 32A, 32B are configured to grip the neck part of a PET bottle 1 from the left and right sides.

As shown in FIG. 5(a), in each rocking box B, a first gear member 33A is provided to the first rotary shaft 31A, and a second gear member 33B is provided to the second rotary shaft 31B, the second gear member 33B being meshed with the first gear member 33A.

With such a configuration, when the first gear member 33A is rotated due to rotation of the first rotary shaft 31A, the second gear member 33B rotates the second rotary shaft 31B in an interlocking manner with the rotation of the first gear member 33A, thus opening and closing the first gripping member 32A and the second gripping member 32B.

In the rocking box B, springs 34 are provided in such a way as to surround the first rotary shaft 31A and the second rotary shaft 31B. The springs 34 bias, via the first and second rotary shafts 31A, 31B, the first gripping member 32A and the second gripping member 32B in directions in which the first gripping member 32A and the second gripping member 32B are closed.

The opening/closing unit 23 which opens and closes the intermediate grippers GB includes opening/closing cam followers 41 and opening/closing cams 42, the opening/closing cam followers 41 being coupled to the first rotary shafts 31A, the opening/closing cams 42 coming into contact with the opening/closing cam followers 41.

FIG. 6(a) and FIG. 6(b) are diagrams illustrating opening and closing of the intermediate gripper GB which is opened and closed by the opening/closing unit 23 at the upstream-side delivery position P1. FIG. 6(a) shows a state in which the intermediate gripper GB is opened, and FIG. 6(b) shows a state in which the intermediate gripper GB is closed to grip a PET bottle 1.

As shown in FIG. 3, the opening/closing cam follower 41 is provided at the distal end of an opening/closing arm 41a provided to the first rotary shaft 31A, and the opening/closing cams 42 are provided in such a way as to come into contact with the opening/closing cam follower 41 from the inner peripheral side of the fifth rotary wheel H5.

As shown in FIG. 2, the opening/closing cams 42 are provided in the vicinity of the upstream-side delivery position P1 and the downstream-side delivery position P2, PET bottles 1 being delivered from the fourth rotary wheel H4 at the upstream-side delivery position P1, the PET bottles 1 being delivered to the sixth rotary wheel H6 at the downstream-side delivery position P2.

Consequently, when the intermediate gripper GB passes through the upstream-side delivery position P1 and the downstream-side delivery position P2 due to the rotation of the fifth rotary wheel H5, the opening/closing cam follower 41 moves along the opening/closing cams 42.

The opening/closing cam follower 41 is always biased by the biasing force of the springs 34 provided to the first and second rotary shafts 31A, 31B in a direction in which the opening/closing cam follower 41 comes into contact with the opening/closing cam 42. Accordingly, in a zone in which the opening/closing cams 42 are not provided, the opening/closing cam follower 41 is caused to be located on the inner peripheral side of the fifth rotary wheel H5 due to the biasing force of the springs 34, so that the intermediate gripper GB maintains a closed state.

In zones in which the opening/closing cams 42 are provided, the opening/closing cam follower 41 follows the shape of the opening/closing cam 42, thus moving toward the outer peripheral side of the fifth rotary wheel H5, so that the intermediate gripper GB is brought into an open state from a closed state as shown in FIG. 6(a).

When the intermediate gripper GB is further moved, as shown in FIG. 6(b), the opening/closing cam follower 41 follows the opening/closing cam 42, thus moving toward the inner peripheral side of the fifth rotary wheel H5, so that the first rotary shaft 31A is rotated, thus causing the first and second gripping members 32A, 32B to be closed.

The rocking unit 24 will be described. A rocking shaft 51 is fixed in the rocking box B at a position close to the center of the fifth rotary wheel H5, and the rocking shaft 51 is pivotally supported via a bearing in such a way as to be rotatable relative to the upper table 22A and the lower table 22B.

The rocking shaft 51 is provided in such a way as to protrude downward from the lower table 22B, and a rocking cam follower 52 is provided to the lower end part of the rocking shaft 51 via a rocking arm 52a. A rocking cam 53 is held by a required holding member, the rocking cam followers 52 coming into contact with the rocking cam 53.

As shown in FIG. 2, the rocking cam 53 having an endless shape is provided along the rotation locus of the fifth rotary wheel H5, and a neutral zone A1 and a rocking zone A2 are set for the rocking cam 53, the intermediate grippers GB being positioned in a neutral position in the neutral zone A1, the rocking zone A2 being set in the vicinity of the downstream-side delivery position P2, at which delivered to the sixth rotary wheel H6, the intermediate grippers GB being rocked in the rocking zone A2.

When viewed in plan view, the rocking arm 52a is provided in such a way as to incline rearward in the rotational direction of the fifth rotary wheel H5 relative to the rocking box B. A spring 54 is mounted between the rocking arm 52a and the lower table 22B and hence, the rocking cam follower 52 always maintains a contact state with the rocking cam 53.

In FIG. 2, when the rocking cam follower 52 is located in the neutral zone A1 of the rocking cam 53, the rocking unit 24 causes a line to be positioned in a neutral position in which the line extends in a diameter direction, that is, the line passes through the center of the fifth rotary wheel H5, the line being obtained by connecting the rocking shaft 51 of the intermediate gripper GB and the center of a PET bottle 1 held by the intermediate gripper GB.

When the intermediate gripper GB is positioned in the neutral position, an interval between PET bottles 1 held by adjacent intermediate grippers GB is set to be equal to the conveyance pitch in the fourth rotary wheel H4, that is, set to 48π.

In contrast, when the intermediate gripper GB is moved and located in the rocking zone A2, the rocking cam follower 52 is moved toward the inner peripheral side or the outer peripheral side of the fifth rotary wheel H5 by the rocking cam 53.

When the intermediate gripper GB positioned in the neutral position reaches the rocking zone A2 due to the rotation of the fifth rotary wheel H5 (denoted by "GB1" in the drawing), the intermediate gripper GB then approaches the downstream-side delivery position P2, at which delivered to the sixth rotary wheel H6 (denoted by "GB2" in the drawing).

In the intermediate gripper GB2, the rocking cam 53 moves the rocking cam follower 52 toward the outer side in the radial direction to rock the rocking box B toward the downstream side in the rotational direction of the fifth rotary wheel H5.

Then, at a position at which the intermediate gripper GB is located closest to the sixth rotary wheel H6 (denoted by "GB3" in the drawing), the rocking cam 53 moves the rocking cam follower 52 toward the inner side in the radial direction to return the rocking box B to the neutral position.

After the intermediate gripper GB passes through the position closest to the sixth rotary wheel H6 (denoted by "GB4" in the drawing), the rocking cam 53 causes the rocking cam follower 52 to be located at a position more toward the inner side in the radial direction than the position of the rocking cam follower 52 in the neutral position so as to rock the rocking box B toward the upstream side in the rotational direction of the fifth rotary wheel H5.

The rocking unit 24 rocks the intermediate grippers GB in this manner and hence, the intermediate gripper GB2 located upstream of the intermediate gripper GB3 positioned in the neutral position inclines toward the downstream side, thus approaching the intermediate gripper GB3. In contrast, the intermediate gripper GB4 located downstream of the intermediate gripper GB3 inclines toward the upstream side, thus approaching the intermediate gripper GB3.

Intervals between the PET bottles 1 held by the intermediate grippers GB2, GB3, GB4 disposed adjacent to each other become equal to the conveyance pitch in the sixth rotary wheel H6, that is 30π. By opening and closing the intermediate gripper GB by the opening/closing unit 23 in the rocking zone A2, the PET bottles 1 are delivered from the intermediate grippers GB to the downstream grippers GC.

Then, in the intermediate gripper GB moved to a position downstream of the intermediate gripper GB4 (denoted by "GB5" in the drawing), the rocking cam 53 causes the rocking cam follower 52 to be located on the outer side in the radial direction and, in addition, causes the intermediate gripper GB to be positioned in the neutral position before the intermediate gripper GB reaches the terminal end part of the rocking zone A2 (denoted by "GB6" in the drawing).

As a result, after the intermediate gripper GB passes through the rocking zone A2, the intermediate gripper GB is returned to the neutral position before reaching the upstream-side delivery position P1, at which delivered from the fourth rotary wheel H4, and hence, it is possible to deliver the PET bottles 1 from the fourth rotary wheel H4 at a conveyance pitch of 48π.

The switching unit 25 includes air cylinders 61 each of which is provided in the rocking box B as shown in FIG. 3, and switches the intermediate grippers GB between the normal state, which is shown in FIG. 6(a) and FIG. 6(b), and the retracted state, which is shown in FIG. 6(c).

As shown in FIG. 3 and FIG. 4, the proximal portion of a cylinder part 61a, which constitutes the air cylinder 61, is held in a rockable manner by a holding shaft 62 provided in the rocking box B, and the distal end of a rod 61b of the air cylinder 61 is coupled to the second gear member 33B via a coupling unit 63, the second gear member 33B being provided to the second rotary shaft 31B.

As shown in FIG. 5(b) and FIG. 5(c), the coupling unit 63 includes a first coupling member 63a and a second coupling member 63b, the first coupling member 63a being provided to the second rotary shaft 31B, the second coupling member 63b coupling the second gear member 33B and the first coupling member 63a to each other, and having a U shape.

As shown in FIG. 5(b) and FIG. 5(c), the second gear member 33B is provided with a flange portion 33Ba protruding outward, and this flange portion 33Ba has an elongated hole 33Bb having an arc shape as shown in FIG. 5 (c) .

The first coupling member 63a is provided above the second gear member 33B, and is rotatably provided to the second rotary shaft 31B via a bearing. The first coupling member 63a has a protruding part protruding outward, and this protruding part is provided with a pin 63c penetrating through the protruding part in the up-down direction.

The second coupling member 63b has a U shape. The second coupling member 63b supports the flange portion 33Ba of the second gear member 33B and the protruding part of the first coupling member 63a from above and below, and the pin 63c penetrates through the second coupling member 63b.

With such a configuration, when the rod 61b of the air cylinder 61 is moved forward or rearward, the pin 63c is moved together with the second coupling member 63b, so that the first coupling member 63a is rotated relative to the second rotary shaft 31B.

When the first coupling member 63a is rotated, the pin 63c moves along the elongated hole 33Bb of the second gear member. When the rod 61b is further moved with the pin 63c moved to the end part of the elongated hole 33Bb, the pin 63c pushes the flange portion 33Ba of the second gear member 33B via the elongated hole 33Bb, thus causing the second gear member 33B to be rotated together with the second rotary shaft 31B.

In contrast, when the rod 61b of the air cylinder 61 is stopped, so that the pin 63c is brought into a stopped state, the second gear member 33B is rotatable within a range in which the elongated hole 33Bb comes into contact with the pin 63c, so that the second rotary shaft 31B can be rotated within a range corresponding to the length of the elongated hole 33Bb.

The length of the elongated hole 33Bb formed is set to a length that allows, in the normal state described below, the first and second gripping members 32A, 32B to be opened and closed to have the respective states shown in FIG. 6(a) and FIG. 6(b).

When the switching unit 25 having the above-mentioned configuration brings the intermediate gripper GB into the normal state shown in FIG. 6(a) and FIG. 6(b), the opening/closing unit 23 is allowed to open or close the first and second gripping members 32A, 32B.

In the normal state, the switching unit 25 maintains the rod 61b of the air cylinder 61 in an extending state, and holds the pin 63c of the first coupling member 63a at a position on the outer peripheral side of the fifth rotary wheel H5.

When the intermediate gripper GB is brought into an open state in such a state as shown in FIG. 6(a), the opening/closing cam follower 41 is caused to be located on the outer peripheral side of the fifth rotary wheel H5 by the opening/closing cam 42, and the first gear member 33A and the second gear member 33B are interlocked with each other, so that the first and second gripping members 32A, 32B are opened.

At this point of operation, in the elongated hole 33Bb formed in the second gear member 33B, the pin 63c is located on the outer peripheral side of the fifth rotary wheel H5.

To bring the intermediate gripper GB into a closed state shown in FIG. 6(b) from such a state, it is sufficient to move the opening/closing cam follower 41 toward the inner peripheral side of the fifth rotary wheel H5 by the opening/closing cam 42. By rotating the first and second rotary shafts 31A, 31B by the biasing force of the springs, the first and second gripping members 32A, 32B are closed.

At this point of operation, although the pin 63c of the first coupling member 63a is in a stopped state, the second gear member 33B is rotated until the pin 63c is located at the end part of the elongated hole 33Bb on the inner peripheral side, thus rotating the second rotary shaft 31B and hence, the first and second gripping members 32A, 32B can be closed.

Next, in the retracted state shown in FIG. 6(c), the switching unit 25 causes the rod 61b of the air cylinder 61 to be contracted, thus causing the pin 63c of the first coupling member 63a to move toward the inner peripheral side of the fifth rotary wheel H5.

When the pin 63c is moved toward the inner peripheral side, the pin 63c comes into contact with the end part of the elongated hole 33Bb on the inner peripheral side of the fifth rotary wheel H5. By causing the rod 61b to be further contracted, the pin 63c rotates the second gear member 33B via the elongated hole 33Bb, thus causing the first coupling member 63a and the second gear member 33B to be integrally rotated.

Consequently, the first gear member 33A is also rotated in an interlocking manner with the second gear member 33B, thus allowing the first and second gripping members 32A, 32B to be opened at an angle larger than that in the normal state shown in FIG. 6(a). At this point of operation, the opening/closing cam follower 41 is separated from the opening/closing cam 42.

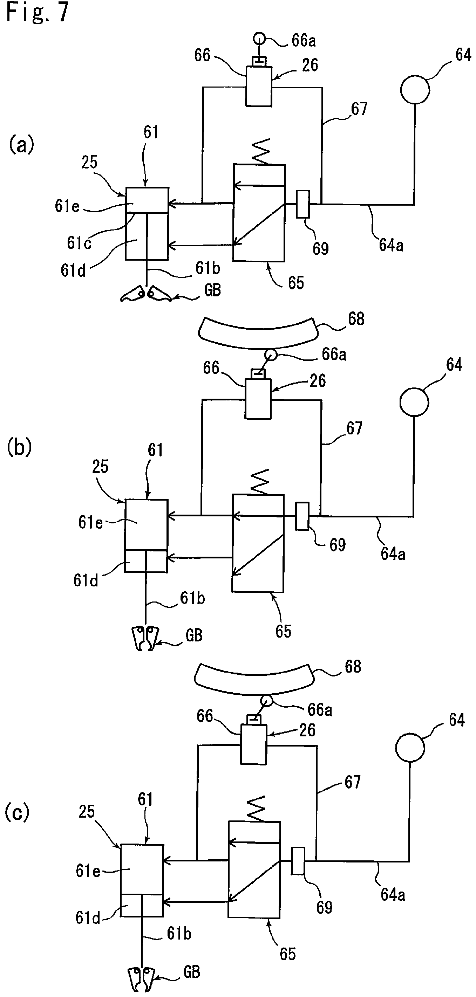

Next, the air cylinder 61 serving as the switching unit 25, and the collision preventing unit 26 will be described with reference to FIG. 7.

FIG. 7(a) is a diagram illustrating a case in which, at the upstream-side delivery position P1, the intermediate gripper GB is brought into the retracted state by actuating a solenoid valve 65 described later. FIG. 7(b) is a diagram illustrating a case in which, at the downstream-side delivery position P2, the intermediate gripper GB is brought into the normal state by actuating the solenoid valve 65 and a mechanical valve 66 described later. FIG. 7(c) is a diagram illustrating a case in which, at the downstream-side delivery position P2, the intermediate gripper GB is brought into the normal state by actuating only the mechanical valve 66 due to non-actuation of the solenoid valve 65.

The air cylinder 61 is connected to an air supply unit 64, and the inside of the cylinder part 61a is divided into a rod side chamber 61d and a head side chamber 61e by a piston 61c provided at the proximal portion of the rod 61b.

The solenoid valve 65 and the mechanical valve 66 are provided to a pipe 64a provided between the air cylinder 61 and the air supply unit 64, the solenoid valve 65 being controlled by the control unit 5, the mechanical valve 66 constituting the collision preventing unit 26 fixed to the fifth rotary wheel H5.

The solenoid valve 65 can be switched, by an electric current supplied/cut off by control of the control unit 5, between a position shown in FIG. 7(a) at which air is supplied to the rod side chamber 61d and a position shown in FIG. 7(b) at which air is supplied to the head side chamber 61e.

The solenoid valve 65 in the present embodiment is set such that the solenoid valve 65 is brought into a state shown in FIG. 7(a) when an electric current is cut off, whereas the solenoid valve 65 is brought into a state shown in FIG. 7(b) when an electric current is supplied to the solenoid valve 65.

In other words, when supply of an electric current to the solenoid valve 65 is cut off, as shown in FIG. 7(a), air from the air supply unit 64 flows into the rod side chamber 61d, thus bringing the rod 61b into a contracted state, hence bringing the intermediate gripper GB into the retracted state.

In contrast, when an electric current is supplied to the solenoid valve 65, as shown in FIG. 7(b), air from the air supply unit 64 flows into the head side chamber 61e, thus bringing the rod 61b into an extending state, hence bringing the intermediate gripper GB into the normal state.

When an abnormality occurs in the blow molding part 3, so that the fourth rotary wheel H4 is stopped, as described above, before the intermediate gripper GB reaches the upstream-side delivery position P1, the control unit 5 causes the switching unit 25 to switch the intermediate gripper GB to the retracted state to avoid collision between the intermediate gripper GB and the PET bottle 1 gripped by the fourth rotary wheel H4 and, before the intermediate gripper GB in the retracted state reaches the downstream-side delivery position P2, the control unit 5 causes the switching unit 25 to switch the intermediate gripper GB to the normal state.

However, when it becomes impossible to control the solenoid valve 65 due to the occurrence of power failure after stop of the fourth rotary wheel H4 or due to malfunction of the solenoid valve 65 itself or the like, a state shown in FIG. 7(a) is maintained in which air from the air supply unit 64 flows into the rod side chamber 61d and hence, the intermediate gripper GB is moved to the downstream-side delivery position P2 while maintaining the retracted state without being switched to the normal state.

At the downstream-side delivery position P2, small intervals between intermediate grippers GB are set by the rocking unit 24 and hence, when the intermediate grippers GB maintain the retracted state, that is, the first and second gripping members 32A, 32B maintain a state of being open at a large angle, there is a concern that adjacent intermediate grippers GB may collide with each other.

In view of the above, in the present embodiment, the collision preventing unit 26 is disposed to prevent such a situation.

A branch pipe 67 is connected to the mechanical valve 66, which constitutes the collision preventing unit 26, such that the branch pipe 67 is branched from the pipe 64a so as to bypass the solenoid valve 65. The end part of the branch pipe 67 on the downstream side is connected to the pipe 64a at a position communicating with the head side chamber 61e of the air cylinder 61. Each mechanical valve 66 is fixed to the upper table 22A of the fifth rotary wheel H5 as shown in FIG. 3, and a switch 66a is provided on the inner peripheral side. As shown in FIG. 2, an actuation cam 68 is provided in the downstream-side delivery position P2 at a position on the inner peripheral side relative to the mechanical valves 66, the actuation cam 68 coming into contact with the switches 66a to actuate the mechanical valves 66. During the period in which each intermediate gripper GB passes through the downstream-side delivery position P2, the switch 66a is in contact with the actuation cam 68, thus causing the mechanical valve 66 to be actuated.

The mechanical valve 66 is configured to close the branch pipe 67 when the switch 66a is not in contact with the actuation cam 68. When the switch 66a comes into contact with the actuation cam 68, the mechanical valve 66 is opened, thus allowing air from the air supply unit 64 to flow into the head side chamber 61e of the air cylinder 61.

A regulator 69 is provided to the pipe 64a at a position downstream and adjacent to the position at which the pipe 64a is connected to the branch pipe 67. The regulator 69 reduces the pressure of air from the air supply unit 64, and then supplies the air to the solenoid valve 65.

As shown in FIG. 7(c), in a state in which air is supplied to the rod side chamber 61d of the air cylinder 61 by the solenoid valve 65, and air is also supplied to the head side chamber 61e by the mechanical valve 66, the pressure in the head side chamber 61e is high due to a differential pressure and hence, the rod 61b is brought into an extending state.

In other words, at the downstream-side delivery position P2, when air is supplied to either the rod side chamber 61d or the head side chamber 61e of the air cylinder 61 by the solenoid valve 65, the air cylinder 61 is brought into an extending state by air from the mechanical valve 66, so that the intermediate gripper GB maintains the normal state.

Hereinafter, the action of the beverage production line 2 having the above-mentioned configuration will be described.

First, a description will be made for an action in the case in which the beverage production line 2 is normally operated, and both the blow molding part 3 and the filling part 4 are normally operated.

First, in the blow molding part 3, parisons are molded into PET bottles 1 by the blow molding unit including the second rotary wheel H2 and, thereafter, the molded PET bottles 1 are conveyed by the fourth rotary wheel H4 as the upstream rotary wheel at a conveyance pitch of 48π.

At the upstream-side delivery position P1 at which delivered between the fourth rotary wheel H4 and the fifth rotary wheel H5, in the fifth rotary wheel H5, the rocking unit 24 causes the intermediate grippers GB to be positioned in the neutral position, and the switching unit 25 causes the intermediate grippers GB to be in the normal state as shown in FIG. 6(a), FIG. 6(b), and FIG. 7(b).

Consequently, the interval between the adjacent intermediate grippers GB is equal to the interval between PET bottles 1 held by the upstream grippers GA of the fourth rotary wheel H4. When the opening/closing unit 23 opens and closes the first and second gripping members 32A, 32B of each intermediate gripper GB at the opening degree shown in FIG. 6(a) and FIG. 6(b), the PET bottle 1 is delivered.

When the delivery of the PET bottle 1 is completed at the upstream-side delivery position P1, and the fifth rotary wheel H5 is then further rotated, the rocking unit 24 conveys the PET bottle 1 while maintaining the intermediate gripper GB in the neutral position, that is, while maintaining a conveyance pitch of 48π, thus causing the PET bottle 1 to pass through an area below the injection nozzles 11, which constitute the sterilizing unit.

During such a conveyance, hydrogen peroxide vapor is injected into the PET bottle 1 by the injection nozzles 11 to sterilize the PET bottle 1.

When the flowmeter 16 detects an insufficient concentration of hydrogen peroxide vapor during the sterilization, the control unit 5 recognizes, by using an encoder not shown in the drawing or the like, the positions of the PET bottles 1 that passed the injection nozzles 11 during the period in which hydrogen peroxide vapor was not sufficiently generated.

When the intermediate gripper GB holding such a PET bottle 1 is located above the reject box 12 shown in FIG. 2, the control unit 5 causes the air cylinder 61 to be actuated to bring the intermediate gripper GB into the retracted state shown in FIG. 6(c), thus forcibly bringing the first and second gripping members 32A, 32B into an open state.

Consequently, the PET bottle 1 gripped by the intermediate gripper GB falls into the reject box 12 to be collected. Thereafter, the control unit 5 causes the air cylinder 61 to be actuated to switch the intermediate gripper GB in the retracted state to the normal state.

When the intermediate gripper GB of the fifth rotary wheel H5 approaches the downstream-side delivery position P2, at which delivered to the sixth rotary wheel H6, the rocking unit 24 rocks the intermediate gripper GB so as to reduce the interval between adjacent intermediate grippers GB, thus causing the conveyance pitch of the intermediate gripper GB to be equal to the conveyance pitch of the downstream gripper GC, that is 30π.

At this point of operation, the switching unit 25 causes the intermediate gripper GB to be in the normal state and hence, the intermediate gripper GB is caused to perform an opening/closing action by the opening/closing cam follower 41 and the opening/closing cam 42 as shown in FIG. 6(a) and FIG. 6(b). Accordingly, it is possible to deliver the PET bottle 1 to the downstream gripper GC of the sixth rotary wheel H6.

After the intermediate gripper GB passes through the downstream-side delivery position P2, at which delivered to the sixth rotary wheel H6, the rocking unit 24 rocks the intermediate gripper GB so as to return the intermediate gripper GB to the neutral position, thus causing the conveyance pitch of the intermediate gripper GB to be equal to the conveyance pitch of the upstream gripper GA of the fourth rotary wheel H4, that is 48π.

As described above, during the period in which the beverage production line 2 is normally operated, a conveyance pitch is adjusted by the fifth rotary wheel H5, thus allowing delivery between the blow molding part 3 and the filling part 4 having different conveyance pitches.

Next, a description will be made for an action in a case in which an abnormality occurs in the blow molding part 3, so that the fourth rotary wheel H4 is abnormally stopped.

As described above, the blow molding part 3 and the filling part 4 are driven by the different drive sources and hence, even in the case in which the blow molding part 3 is abnormally stopped, the action of the filling part 4 can be continued, thus allowing processing to be completed for PET bottles 1 held by the filling part 4.

However, when the fourth rotary wheel H4 is stopped, due to continuation of rotation of the fifth rotary wheel H5, the intermediate gripper GB collides with the PET bottle 1 held by the upstream gripper GA that is stopped at the upstream-side delivery position P1.

In view of the above, when the control unit 5 recognizes the occurrence of an abnormality in the blow molding part 3, the control unit 5 controls the switching unit 25 to switch the intermediate gripper GB located at the upstream-side delivery position P1 to the retracted state shown in FIG. 6(c), and controls the switching unit 25 to switch the intermediate gripper GB moving to the upstream-side delivery position P1 to the retracted state shown in FIG. 6(c) before this intermediate gripper GB reaches the upstream-side delivery position P1.

As a result, the first and second gripping members 32A, 32B of the intermediate grippers GB are largely opened and hence, at the upstream-side delivery position P1, it is possible to avoid collision between the PET bottles 1 held by the upstream grippers GA and the first and second gripping members 32A, 32B of the intermediate grippers GB.

For intermediate grippers GB located downstream of the upstream-side delivery position P1 at the time of occurrence of an abnormality, the switching unit 25 causes such intermediate grippers GB to maintain the normal state to allow delivery of the PET bottles 1 to the sixth rotary wheel H6 at the downstream-side delivery position P2.

However, when the intermediate grippers GB brought into the retracted state are moved as it is to the downstream-side delivery position P2, at which delivered to the sixth rotary wheel H6, the intermediate grippers GB are caused to approach each other by the rocking unit 24 and hence, there is a concern that the gripping members 32A, 32B of the adjacent intermediate grippers GB may interfere with each other.

In view of the above, before the intermediate grippers GB in the retracted state are located at the downstream-side delivery position P2, the control unit 5 controls the switching unit 25 to switch the intermediate grippers GB to the normal state.

With such an operation, even when the intermediate grippers GB are caused to approach each other, interference between the gripping members 32A, 32B can be avoided.

Next, a description will be made for an action performed when power failure or the like occurs in the fifth rotary wheel H5.

As shown in FIG. 7, switching of air for the air cylinder 61, which constitutes the switching unit 25, is performed by the solenoid valve 65. When an electric current is applied to the solenoid valve 65, air is supplied to the head side chamber 61e, thus bringing the air cylinder 61 into an extending state, hence maintaining the intermediate gripper GB in the normal state.

Thus, when supply of an electric current to the solenoid valve 65 is stopped due to power failure, control cannot be performed by the control unit 5 and hence, the solenoid valve 65 allows air to be supplied to the rod side chamber 61d, thus bringing the air cylinder 61 into a contracted state.

As a result, the intermediate gripper GB is brought into the retracted state. In such a case, as described above, there is a concern that the gripping members 32A, 32B of the adjacent intermediate grippers GB may interfere with each other at the downstream-side delivery position P2.

In view of the above, in the present embodiment, interference between the intermediate grippers GB is prevented by the collision preventing unit 26 in case of loss of control of the solenoid valves 65.

When the intermediate gripper GB is located at the downstream-side delivery position P2, the switch 66a of the mechanical valve 66 provided to each intermediate gripper GB comes into contact with the actuation cam 68, so that air is supplied to the head side chamber 61e of the air cylinder 61 from the branch pipe 67 via the mechanical valve 66.

At this point of operation, although air is supplied to the rod side chamber 61d of the air cylinder 61 via the solenoid valve 65, the air cylinder 61 is brought into an extending state due to a differential pressure generated by the regulator 69. Accordingly, it is possible to maintain the intermediate gripper GB in the normal state and hence, it is possible to prevent collision between the intermediate grippers GB at the downstream-side delivery position P2.

As described above, in the beverage production line 2 according to the present embodiment, even in the case in which the conveyance pitch in the fourth rotary wheel H4 differs from the conveyance pitch in the sixth rotary wheel H6, the intermediate grippers GB are rocked by the rocking unit 24, provided to the fifth rotary wheel H5, to adjust a conveyance pitch and hence, it is possible to deliver the PET bottles 1.

When the fourth rotary wheel H4, which constitutes the blow molding part 3, is stopped, the switching unit 25 provided to the fifth rotary wheel H5 brings the intermediate grippers GB into the retracted state and hence, it is possible to prevent collision of the intermediate grippers GB with the PET bottles 1 held by the upstream grippers GA.

In contrast, when the intermediate gripper GB is located at the downstream-side delivery position P2, at which delivered to the sixth rotary wheel H6, the switching unit 25 switches the intermediate gripper GB to the normal state again, thus preventing interference between adjacent intermediate grippers GB at the downstream-side delivery position P2.

As described above, in the present embodiment, the rocking unit 24 and the switching unit 25 are provided to the fifth rotary wheel H5, the rocking unit 24 rocking the intermediate grippers GB to adjust a conveyance pitch, the switching unit 25 allowing the intermediate grippers GB to avoid collision with the PET bottles 1 held by the upstream grippers GA. Accordingly, the number of rotary wheels constituting the container conveyance device 6 can be reduced, thus shortening the length of the line.

Even if power failure occurs in the fifth rotary wheel H5, thus causing loss of control of the solenoid valves 65, which actuate the switching unit 25, in the present embodiment, the collision preventing unit 26 is provided to cause the intermediate grippers GB to maintain the normal state at the downstream-side delivery position P2, at which delivered to the sixth rotary wheel H6, and hence, it is possible to prevent interference between the gripping members at the downstream-side delivery position P2.

### Reference Signs List

- 1: PET bottle (container)
- 2: beverage production line
- 3: blow molding part
- 4: filling part
- 6: container conveyance device
- 23: opening/closing unit
- 24: rocking unit
- 25: switching unit
- 26: collision preventing unit
- GA: upstream gripper
- GB: intermediate gripper
- GC: downstream gripper
- H4: fourth rotary wheel (upstream rotary wheel)
- H5: fifth rotary wheel (intermediate rotary wheel)
- H6: sixth rotary wheel (downstream rotary wheel)

## Claims

1. A container conveyance device comprising: an upstream rotary wheel including an upstream gripper configured to grip a container; a downstream rotary wheel including a downstream gripper configured to grip the container; an intermediate rotary wheel provided between the upstream rotary wheel and the downstream rotary wheel, and including an intermediate gripper configured to grip the container; and an opening/closing unit configured to open and close a gripping member constituting the intermediate gripper, the container conveyance device being **characterized in that**
a conveyance pitch of the container in the downstream rotary wheel is set to be smaller than a conveyance pitch of the container in the upstream rotary wheel,
a rocking unit configured to rock the intermediate gripper is provided to the intermediate rotary wheel and, at a downstream-side delivery position, at which delivered to the downstream rotary wheel, a conveyance pitch of the container is caused to be equal to the conveyance pitch of the downstream gripper by rocking the intermediate gripper such that adjacent intermediate grippers approach each other,
a switching unit is further provided to the intermediate rotary wheel, the switching unit being configured to switch an opening degree of the gripping member of the intermediate gripper between a normal state and a retracted state, the container being delivered in the normal state, the opening degree of the gripping member in the retracted state being larger than the opening degree of the gripping member in the normal state, and
in a case in which the upstream rotary wheel is stopped, but rotation of the intermediate rotary wheel is continued, the switching unit switches the intermediate gripper from the normal state to the retracted state before the intermediate gripper reaches an upstream-side delivery position at which the container is delivered from the upstream rotary wheel, and the switching unit switches the intermediate gripper from the retracted state to the normal state before the intermediate gripper reaches the downstream-side delivery position from the upstream-side delivery position.

2. The container conveyance device according to claim 1, **characterized in that** a collision preventing unit is provided, the collision preventing unit being configured to maintain the intermediate gripper in the normal state when the intermediate gripper passes through the downstream-side delivery position, at which the container is delivered to the downstream rotary wheel.
